# DEMANDE DE BREVET EUROPEEN

(11) **EP 2 508 859 A1**
(43) Date de publication de la demande: **10.10.2012**
(21) Numéro de dépôt: 11175404.0
(22) Date de dépôt: 14.12.2004
(51) Int. Cl.: G01L 1/14, G01L 5/00, G01M 13/04

(54) **Dispositif de mesure de charge sur un palier, palier à roulement à dispositif de mesure de charge et machine à tambour rotatif**

(30) Priorité: 15.12.2003 FR 0314673; 07.05.2004 FR 0404989
(62) Demande divisionnaire de: 04805702.0
(71) Demandeur: Aktiebolaget SKF, S 415 50 Göteborg (SE)
(72) Inventeur: Niarfeix, François, 37000 Tours (FR); De Montgolfier, Antoine, 07100 Annonay (FR)
(74) Mandataire: Casalonga, Axel

(57) **Abrégé**

L'invention concerne un palier à roulement comprenant un support et un roulement disposé dans le support, le roulement comprenant deux bagues dont l'une peut tourner par rapport à l'autre, au moins une rangée d'éléments roulants, le support comprenant un dispositif de mesure de la charge appliquée sur ledit palier, le dispositif de mesure comprenant au moins un condensateur pourvu d'électrodes et d'un isolant entre les électrodes, caractérisé par le fait que qu'il comprend en outre un manchon dans lequel est logée la bague non tournante du roulement, ledit manchon comportant un corps dans l'épaisseur duquel est ménagée au moins une fente destinée à recevoir un condensateur, ladite fente débouchant au niveau d'une surface latérale du corps du manchon et ladite fente étant délimitée dans le sens d'application de la charge, par deux parois espacées d'une distance sensiblement constante.

## Description

La présente invention relève du domaine des dispositifs de mesure de charge mécanique sur un palier, en particulier un palier à roulement.

On connaît à cet égard le document DE-A-101 36 438, qui décrit un roulement pourvu de capteurs piézoélectriques montés entre la bague extérieure et le logement de ladite bague extérieure.

Les capteurs piézoélectriques présentent l'inconvénient majeur de ne fournir les informations recherchées que lorsque le roulement tourne. Or, de nombreuses applications nécessitent de connaître les charges appliquées sur le roulement indépendamment de la rotation dudit roulement. Par ailleurs, les dispositifs existant à ce jour nécessitent des modifications de la structure du roulement pour l'intégration des capteurs, ce qui est coûteux. Les capteurs peuvent être disposés dans une encoche usinée par enlèvement de copeaux dans la bague extérieure. La fabrication de telles bagues est plus longue et génératrice de déchets.

L'invention vise à remédier à ces inconvénients.

L'invention propose une mesure de charge sur un dispositif de palier comportant un roulement standard, et ce, que le roulement soit en rotation ou non.

Le palier à roulement, selon un aspect de l'invention, comprend un support et un roulement disposé dans le support, le roulement comprenant deux bagues dont l'une peut tourner par rapport à l'autre, et au moins une rangée d'éléments roulants, le support comprenant un dispositif de mesure de la charge appliquée sur ledit palier. On peut ainsi mesurer la charge d'un palier à roulement standard fabriqué en grande série, lors de la rotation du palier ou lors d'une phase stationnaire.

Le palier à roulement peut être destiné à une machine à laver à tambour rotatif.

Dans un mode de réalisation, le dispositif de mesure de charge comprend un capteur capacitif. Le capteur capacitif peut comprendre un condensateur pourvu d'électrodes et d'un isolant disposé entre lesdites électrodes, l'épaisseur de l'isolant pouvant varier en fonction de la charge, la capacité du condensateur étant représentative de la charge appliquée perpendiculairement sur les électrodes. L'isolant peut comprendre une couche de matériau synthétique. L'isolant peut être pré-chargé entre les électrodes. On peut ainsi contrôler la déformation de l'isolant en fonction de la charge.

Dans un mode de réalisation, l'isolant comprend une couche de fluide.

Dans un mode de réalisation, le palier comprend une pluralité de condensateurs comportant une électrode commune. La détermination de la charge est alors plus précise. On peut également détecter un éventuel balourd lors de la rotation.

Dans un autre mode de réalisation, le palier comprend un seul condensateur.

Dans un mode de réalisation, le support est électriquement conducteur et forme une électrode.

Dans un autre mode de réalisation, le dispositif de mesure de charge comprend un capteur résistif sensible à la pression. Le capteur résistif peut comprendre une bande souple sensible à la pression exercée, directement ou indirectement, perpendiculairement aux faces opposées dudit capteur.

Dans un mode de réalisation, le film du capteur comprend une couche d'encre dont la résistance électrique varie en fonction de la pression exercée sur ladite couche, des électrodes encapsulées à l'intérieur du film et venant en appui sur la couche d'encre, le capteur comprenant en outre des éléments de connexion en saillie par rapport à une surface radiale du corps du manchon, aptes à transmettre une donnée représentative de l'état de charge du roulement.

Dans un mode de réalisation, le palier comprend en outre un manchon intermédiaire dans lequel vient se loger la bague non tournante du roulement, ledit manchon comprenant un corps dans l'épaisseur duquel est ménagée au moins une fente destinée à recevoir le capteur, ladite fente débouchant au niveau d'une surface latérale du corps du manchon et ladite fente étant délimitée, dans le sens d'application des charges sur le capteur, par deux parois espacées d'une distance sensiblement constante.

Dans un mode de réalisation, le capteur de charge vient en contact avec au moins une des parois délimitant la fente dans le sens d'application des charges.

La fente peut se présenter sous la forme d'un secteur circulaire centré sur l'axe de rotation du corps du manchon et s'étendant axialement sensiblement sur toute la longueur dudit corps.

La fente peut être délimitée par deux surfaces planes parallèles.

Dans un mode de réalisation, le palier comprend un capteur de paramètres de rotation monté sur un côté des bagues.

L'invention concerne également une machine à laver à tambour rotatif comprenant un châssis non tournant, un tambour rotatif et au moins un palier. Le palier comprend un support et un roulement disposé dans le support, le roulement comprenant deux bagues dont l'une peut tourner par rapport à l'autre, et au moins une rangée d'éléments roulants, le support comprenant un dispositif de mesure de la charge appliquée sur ledit palier.

Le dispositif de mesure de charge sur un palier à roulement pourvu de deux bagues dont l'une peut tourner par rapport à l'autre, selon un aspect de l'invention, comprend au moins un condensateur pourvu d'électrodes et d'un isolant disposé entre les électrodes.

L'épaisseur de l'isolant peut varier en fonction de la charge, ladite capacité étant représentative de la charge appliquée perpendiculairement sur les électrodes. L'une des électrodes et le palier sont supportés par un organe de support commun. On peut ainsi mesurer la charge d'un palier à roulement standard fabriqué en grande série, lors de la rotation du palier ou lors d'une phase stationnaire.

On comprend que, avant montage du dispositif de mesure sur le palier, le dispositif de mesure se présente sous la forme d'un sous-ensemble comprenant au moins une électrode, l'isolant éventuellement et le moyen de mesure de la capacité.

Dans un mode de réalisation de l'invention, l'isolant comprend une couche de matériau déformable. L'isolant peut comprendre une couche d'air. Avantageusement, les électrodes sont supportées par ledit organe.

Dans un mode de réalisation de l'invention, le dispositif comprend une pluralité de condensateurs. En d'autres termes, on peut prévoir une pluralité d'électrodes disposées autour de l'isolant lorsque l'isolant est monté autour de la bague extérieure ou dans l'alésage de l'isolant lorsque l'isolant est monté dans l'alésage de la bague intérieure. La détermination de la charge est alors plus précise. On peut également détecter un éventuel balourd lors de la rotation.

Dans un autre mode de réalisation de l'invention, le dispositif comprend un seul condensateur.

Le dispositif de détection peut comprendre, en outre, un moyen de détection de la capacité du condensateur, la capacité étant représentative de la charge. On entend ici par charge la charge mécanique à laquelle est soumis le palier à roulement. Un palier standard peut ainsi être équipé par une opération simple de montage d'un dispositif de mesure. Une des bagues peut former une électrode. La bague-électrode remplit alors une double fonction, une fonction mécanique de bague et une fonction électrique d'électrode. Ledit organe peut former une électrode.

Dans un mode de réalisation de l'invention, le palier comprend un moyen de mesure de la capacité du condensateur, notamment un moyen de mesure différentielle.

Dans un mode de réalisation de l'invention, une bague et ledit organe de support forment une pièce monobloc.

La présente invention concerne également une machine à laver à tambour rotatif qui comprend un châssis non tournant, un tambour rotatif et un dispositif de mesure de charge permettant de déterminer, en association avec un dispositif de traitement du signal, la charge exercée sur ledit dispositif.

La présente invention concerne également un galet tendeur de courroie comprenant un dispositif de mesure de la charge dudit galet.

En d'autres termes, l'une des deux bagues du roulement peut être utilisée comme électrode du condensateur, et l'autre électrode disposée en regard de ladite bague et séparée de celle-ci par un isolant dont l'épaisseur peut varier avec la charge.

L'invention permet donc de réaliser un palier à roulement instrumenté susceptible de fournir de nombreuses informations utiles au pilotage d'une machine, et ce de façon fiable et économique.

La présente invention sera mieux comprise à l'étude de la description détaillée de quelques modes de réalisation illustrés par les dessins annexés, sur lesquels:
- la figure 1 est une vue en coupe axiale d'un palier selon un aspect de l'invention;
- la figure 2 est une vue de détail en coupe transversale du palier;
- la figure 3 est une vue schématique et partielle de face en élévation d'une variante d'un palier à roulement voisin de celui de la figure 1, complétée par un schéma électrique;
- la figure 4 est un diagramme montrant l'évolution de la charge en fonction de la capacité du condensateur;
- la figure 5 est une vue en coupe axiale d'un palier à roulement selon un autre aspect de l'invention;
- la figure 6 est une vue de détail en coupe transversale du palier de la figure 5;
- la figure 7 est une vue en coupe axiale d'un palier à roulement comprenant un dispositif de mesure de charge selon un autre mode de réalisation,
- la figure 8 est une vue de côté du palier à roulement de la figure 7;
- la figure 9 est une vue en perspective du palier à roulement de la figure 7;
- la figure 10 est une vue en coupe axiale d'un élément du dispositif de mesure de charge selon un autre mode de réalisation,
- la figure 11 est une vue de détail d'un capteur d'un dispositif de mesure selon un aspect de l'invention;
- la figure 12 est une vue en coupe axiale d'un palier à roulement comprenant un dispositif de mesure de charge selon un autre mode de réalisation de l'invention;
- la figure 13 est une vue schématique en coupe axiale d'une machine à laver selon un aspect de l'invention;
- la figure 14 est une vue en coupe axiale d'un dispositif selon un aspect de l'invention;
- la figure 15 est une vue en coupe transversale du dispositif;
- la figure 16 est une vue en coupe axiale d'un dispositif selon un autre mode de réalisation; et
- les figures 17 et 18 montrent des variantes en coupe transversale du dispositif de la figure 5.

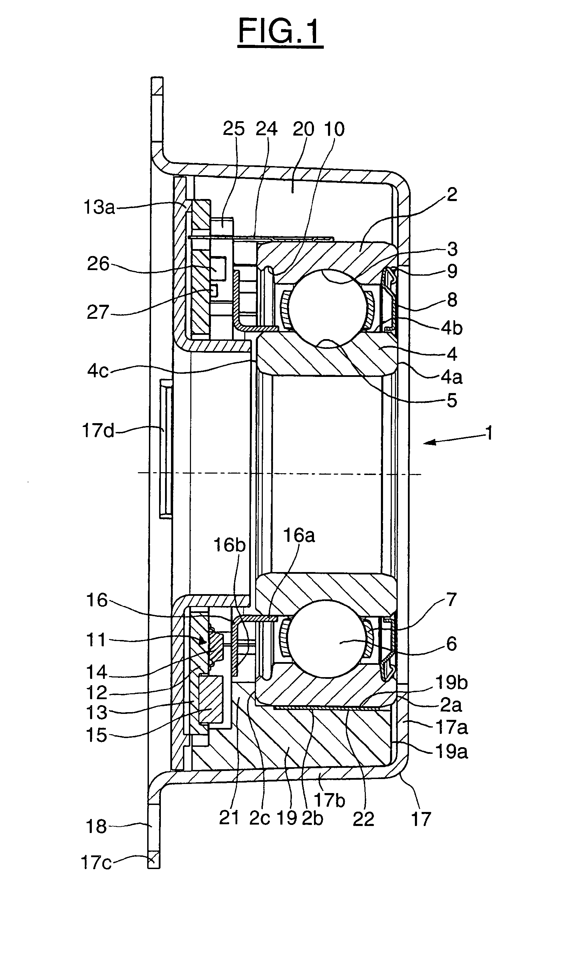

Comme on peut le voir sur la figure 1, un palier à roulement 1 comprend une bague extérieure 2 pourvue d'un chemin de roulement 3, une bague intérieure 4 pourvue d'un chemin de roulement 5, une rangée d'éléments roulants 6, ici des billes, disposés entre les chemins de roulement 3 et 5, une cage 7 de maintien de l'espace circonférentiel des éléments roulants 6, et un flasque d'étanchéité 8 monté sur la bague extérieure 2 et venant former un passage étroit avec une portée cylindrique 4b de la bague intérieure 4, tout en étant disposé radialement entre les deux bagues 2 et 4 et axialement entre les éléments roulants 6 et l'une des surfaces latérales 2a, 4a des bagues 2, 4. Le flasque d'étanchéité 8 est monté dans une rainure annulaire 9 formée dans la bague extérieure 2, à proximité de sa surface latérale radiale 2a. Du côté opposé, la bague extérieure 2 est également pourvue d'une rainure 10, symétrique à la rainure 9, par rapport à un plan passant par le centre des éléments roulants 6.

Un bloc-capteur, référencé 11 dans son ensemble, est solidaire de la bague extérieure 2 et comprend un support 12, par exemple une carte de circuit imprimé, un capot métallique 13 présentant une forme de coupelle annulaire à section transversale en L dont une extrémité forme un passage étroit avec une surface frontale 4b de la bague intérieure 4, un élément capteur 14, par exemple une cellule à effet Hall, fixé sur le support 12, et un aimant 15 également fixé sur le support 12. Un élément-codeur 16, de forme annulaire, à section en L, comprend une branche axiale 16a emmanchée sur une portée cylindrique extérieure de la bague intérieure 4 du côté opposé au flasque 8 et une branche radiale 16b s'étendant vers l'extérieur à partir de la branche axiale 16a. La branche radiale 16b est pourvue de fenêtres ou d'encoches, non représentées, et est disposée avec un faible entrefer par rapport au capteur 14. Le codeur 16, réalisé en matériau magnétique, perturbe le champ magnétique généré par l'aimant 15 lors de la rotation de la bague intérieure 4 par rapport à la bague extérieure 2. La perturbation générée est détectée par le capteur 14, ce qui permet de générer un signal électrique représentatif de la rotation du codeur 16.

Un boîtier 17, de forme générale annulaire, comprend une portion radiale annulaire 17a en contact à proximité de son alésage avec la face radiale 2a de la bague extérieure 2, une portion légèrement tronconique 17b, présentant une pente de l'ordre de 9 à 13% par rapport à l'axe du roulement, s'étendant à partir de l'extrémité de grand diamètre de la portion radiale 17a en entourant le palier à roulement 1, et une bride radiale 17c dirigée vers l'extérieur à partir de l'extrémité de la portion tronconique 17b opposée à la portion radiale 17a.

Une pluralité de trous de fixation 18 sont formés dans la bride radiale 17c pour permettre une fixation du boîtier 17 et du palier à roulement 1 qui s'y trouve disposés au moyen de vis sur un autre élément, non représenté, tel qu'un châssis ou un bâti de machine à laver.

Il est encore prévu un manchon de serrage 19, réalisé en matériau synthétique, présentant une surface extérieure tronconique en concordance de forme avec la surface intérieure de la portion tronconique 17b du boîtier 17 et se présentant sous la forme d'un anneau fendu par une fente 20 occupant un faible secteur angulaire, afin de conférer audit anneau une certaine élasticité radiale.

En outre, le capot 17 est pourvu de crochets 17d formés sur sa surface intérieure au niveau de la liaison entre la bride radiale 17c et la portion tronconique 17b. Les crochets 17d sont en saillie vers l'intérieur et interfèrent diamétralement avec l'extrémité libre de grand diamètre du capot 13 en formant un moyen de retenue dudit capot 13. Le capot 13 est pourvu en outre d'une nervure annulaire 13a en saillie en direction du palier à roulement 1 et venant en appui sur le support 12, lui-même en appui axial sur un épaulement du manchon 19.

Un ensemble unitaire est ainsi formé, comprenant le palier à roulement 1 proprement dit, le boîtier 17, le manchon 19, le bloc-capteur 11 et le capot 13. Ledit ensemble unitaire peut être manipulé sans précautions particulières et est bien protégé contre le risque de démontage accidentel grâce à la coopération des crochets 17d du boîtier 17 avec le capot 13 et contre l'intrusion d'éléments extérieurs indésirables par le flasque d'étanchéité 8 et par le passage étroit formé entre une extrémité du capot 13 et la bague intérieure 4, l'autre extrémité du capot 13 étant en contact avec le boîtier 17.

Le manchon fendu 19 présente, sur sa surface intérieure, une nervure 21 dirigée vers l'intérieur et offrant une surface d'appui à la surface radiale 2c de la bague extérieure 2 opposée à la surface radiale 2a. Le manchon fendu 19 comporte en outre une surface radiale 19a disposée à une faible distance de la portion radiale 17a du boîtier 17. Ladite faible distance peut être de l'ordre de quelques millimètres ou dixièmes de millimètres, mais en fonctionnement normal, restera strictement supérieure à zéro. On comprend que, en raison de la conicité de la portion tronconique 17b dont le diamètre se réduit à mesure que l'on se rapproche de la portion radiale 17a et que l'on s'éloigne de la bride radiale 17c, le manchon 19 peut coulisser dans la surface intérieure de ladite portion tronconique 17b tout en se resserrant légèrement, ce qui se traduit par un resserrement de la fente 20.

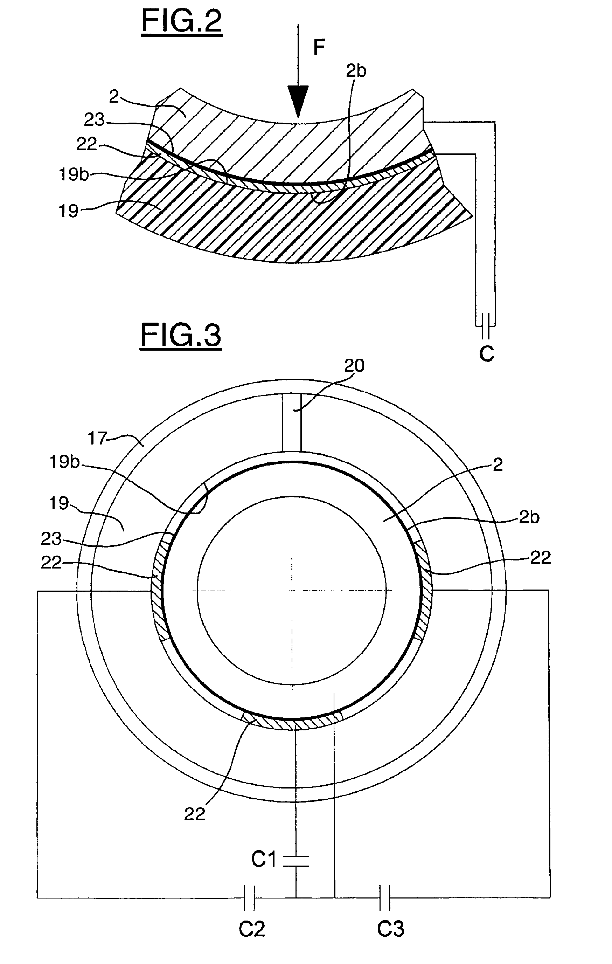

Entre la nervure 21 et la surface radiale d'extrémité 19a, le manchon 19 comprend un alésage 19b dans lequel est disposée une électrode 22 ainsi qu'un isolant 23 visible sur la figure 2. L'isolant 23 est disposé en contact avec la surface extérieure 2b de la bague extérieure 2, l'électrode 22 étant disposée entre la surface extérieure de l'isolant 23 et l'alésage 19b du manchon 19. Un doigt de contact 24 connecté au support 12 vient en contact avec la surface extérieure 2b de la bague extérieure 2. Sur le support 12 est également disposé un organe de mesure 25 de la capacité entre l'électrode 22 et la bague extérieure 2 qui forme également une électrode. Le capteur de mesure 25 est relié électriquement au doigt de contact 24 et à l'électrode 22.

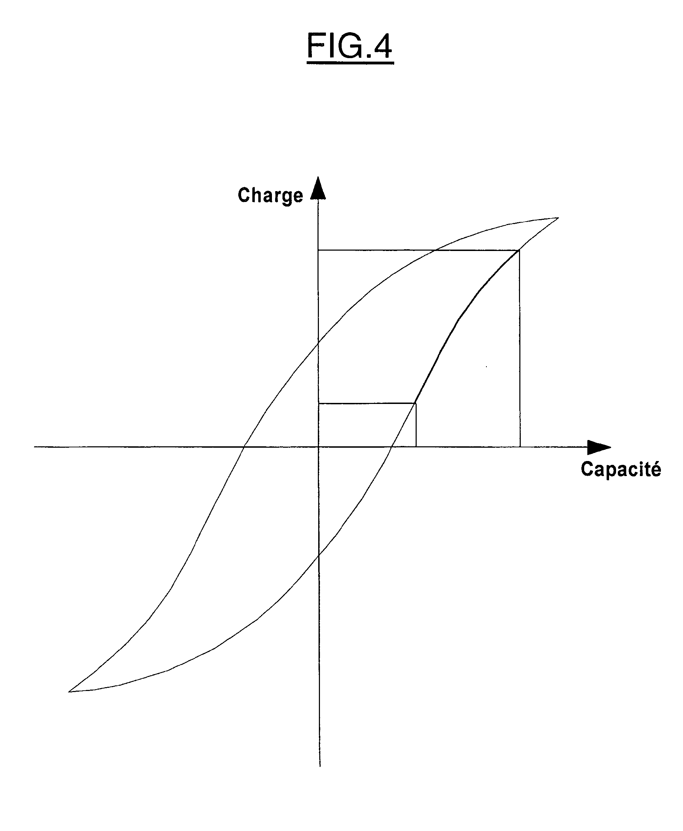

En outre, le support 12 peut être équipé d'un module de traitement et de calcul 26 relié électriquement au capteur de mesure 25 et permettant de déduire la charge appliquée au roulement à partir de la capacité mesurée. La relation entre la charge et la capacité est illustrée sur la figure 4 et est soumise à un hystérésis. Pour éviter les effets de l'hystérésis, on cherche à se placer sur une partie relativement linéaire de la courbe afin de pouvoir interpréter facilement la charge en fonction de la capacité, la partie choisie de la courbe a été représentée en trait épais sur la figure 4.

Le palier à roulement 1 est maintenu radialement par rapport au boîtier 17 par l'intermédiaire de l'isolant 23 déformable radialement, de l'électrode 22 et du manchon fendu 19 qui peut être enfoncé axialement avec une force prédéterminée dans la portion tronconique 17b du boîtier 17 afin d'assurer une précontrainte suffisante de l'isolant 23 pour se situer dans une partie favorable de la courbe illustrée sur la figure 4 et liant la charge du roulement et la capacité du condensateur formée par l'électrode 22 et la bague-électrode 2. La pente du cône est choisie de telle sorte que le serrage obtenu assure également une retenue axiale mutuelle suffisante du manchon fendu 19 sur le boîtier 17.

L'électrode 22 peut se présenter sous la forme d'un clinquant en métal conducteur disposé sur un certain secteur angulaire.

À titre d'exemple illustré sur la figure 3, l'isolant 23 est disposé sur l'ensemble de la surface extérieure de la bague extérieure 2 et trois électrodes 22 sont disposées chacune sur un secteur angulaire, de l'ordre de 20 à 50°, avec deux électrodes diamétralement opposées et la troisième en position perpendiculaire aux deux précédentes. L'isolant 23 peut être réalisé en polyéthylène haute densité, en polypropylène ou encore en polyamide-12. La mesure étant basée sur la variation de l'épaisseur de l'isolant 23 sous l'effet de la variation de la charge, le choix de l'épaisseur de l'isolant 23 dépendra des propriétés mécaniques du matériau utilisé et en particulier de son module d'élasticité.

À titre d'exemple, on peut utiliser des feuilles d'isolant en polyéthylène, d'une épaisseur d'environ 0,02 mm. L'isolant 23 est précontraint radialement entre les deux électrodes grâce au manchon fendu 19 de serrage et reste donc en contact permanent avec les électrodes 2 et 22.

Alternativement au mode de réalisation illustré sur la figure 3, on peut prévoir un isolant 23 occupant les secteurs angulaires sensiblement égaux ou seulement légèrement supérieurs à ceux qui sont occupés par les électrodes 22.

On sait qu'il existe une relation linéaire entre la variation de la distance entre deux électrodes d'un condensateur et la capacité dudit condensateur. La relation est donnée par la formule suivante:
C=(εₒ+εᵣ)S/e, dans laquelle :
   εₒ est la permittivité dans le vide,
   εᵣ est la permittivité de l'isolant,
   S est la surface en regard de l'entrefer, et
   e est l'entrefer.

Si les électrodes sont disposées de telle sorte que la charge radiale sur le roulement passe par les électrodes, perpendiculairement à celles-ci, il est possible de mesurer les variations de la charge radiale sur le roulement par le biais de la mesure de la variation de capacité des électrodes, ladite variation de capacité résultant du rapprochement sous l'effet de la charge de l'électrode mobile et de l'électrode fixe 22.

La précontrainte radiale de l'isolant entre les électrodes par le manchon conique permet d'assurer en permanence un contact étroit entre l'isolant et les électrodes, ce qui garantit une réactivité immédiate du capteur de charge. La pré-charge permet également de s'affranchir des éventuels problèmes d'hystérésis qui pourraient nuire à la fiabilité de la mesure. Si la charge radiale à mesurer est toujours orientée dans la même direction, une électrode 22 judicieusement placée suffira pour mesurer un effort F appliqué au niveau des électrodes 2, 22 dans une direction perpendiculaire auxdites électrodes (figure 2).

Si on souhaite connaître, par le biais d'un roulement instrumenté, la charge statique de linge dans un tambour de machine à laver le linge, il suffit d'équiper ledit roulement avec une électrode dans sa partie basse, en plus de la bague-électrode. La détermination de la charge du tambour se fera par mesure de la variation de l'épaisseur de l'isolant séparant la bague-électrode et l'unique autre électrode associée entre l'état vide et l'état chargé du tambour. Par contre, si l'on souhaite obtenir également des informations sur les charges dynamiques en rotation dues par exemple au balourd du tambour, il suffira de disposer par exemple deux électrodes associées complémentaires à 90°, de part et d'autres de la première autre électrode pour obtenir lesdites informations, voir figure 3.

Outre le fait d'obtenir des informations sur des charges dans différentes directions, la disposition à trois électrodes à 90° permet également de procéder par mesure différentielle par rapport à une électrode de référence qui pourra être par exemple une des électrodes latérales.

En effet, dans le cas d'une machine à laver le linge, les électrodes latérales ne subissent pratiquement pas de variation d'entrefer lors du chargement du tambour puisque les électrodes latérales d'un capteur capacitif se déplacent parallèlement l'une par rapport à l'autre. En mesurant les différences de capacité des différentes électrodes par rapport à une électrode de référence, on peut ainsi éliminer des anomalies de mesure qui pourraient résulter de variations d'entrefer entre les deux électrodes dues par exemple à des variations de température.

On peut bien entendu équiper également ce type de roulement d'un capteur de température 27, ce qui peut être particulièrement intéressant dans le cas d'une utilisation dans une machine à laver le linge ou un sèche-linge.

Pour monter le dispositif, on dispose tout d'abord le palier à roulement 1 muni du codeur 16 et de la ou des électrodes 22 dans le manchon 19. On dispose ensuite le bloc-capteur 11 sur le manchon 19 et on vient fermer et solidariser le sous-ensemble avec le capot 13. On introduit le sous-ensemble ainsi formé dans le boîtier 17 jusqu'à ce que le palier à roulement 1 vienne en butée axiale entre le fond radial 17a du boîtier 17. Le serrage du manchon 19 dans le boîtier 17 et sur le roulement assure ensuite la cohésion à l'ensemble sous la forme d'une cartouche facile à manipuler et à transporter, présentant un risque très faible de montage intempestif des éléments.

Une telle cartouche offre de nombreux avantages, parmi lesquels un coût réduit grâce à l'absence de modification de la géométrie du roulement, en d'autres termes à l'utilisation possible d'un roulement standard fabriqué en très grande série, à la compacité, l'épaisseur de l'isolant et de l'électrode 22 étant négligeable, et l'épaisseur du bloc-capteur étant extrêmement faible, à la facilité de mise en oeuvre par l'utilisateur et la possibilité de combiner dans le même palier à roulement instrumenté un système de détection des charges appliquées sur le palier et un système de mesure de paramètres de rotation du roulement et/ou un système de mesure de la température.

Un palier à roulement instrumenté 1, utilisé dans une machine à laver le linge, permet donc en plus de sa fonction mécanique de base, de fournir les informations utiles pour un pilotage complet de la machine et en particulier du moteur électrique d'entraînement.

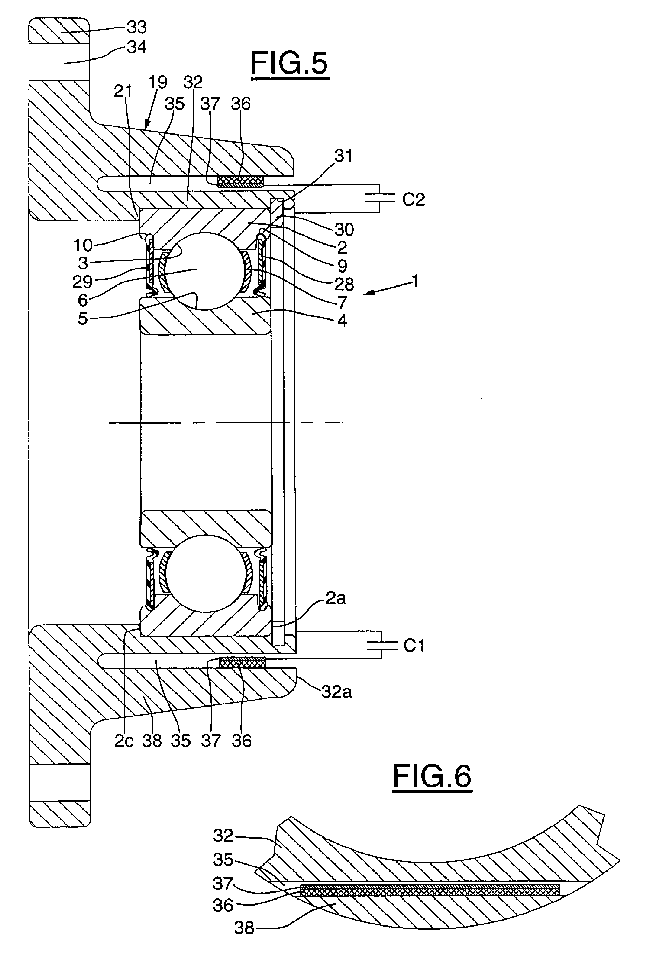

Dans le mode de réalisation illustré sur les figures 5 et 6, le roulement 1 est de type conventionnel et pourvu de deux joints d'étanchéité 28 et 29 montés sur la bague extérieure 2 et venant frotter sur une portée de la bague intérieure 4, les autres références des modes de réalisation précédents étant conservées. Le manchon-support 19 formant logement pour le roulement est pourvu d'un alésage cylindrique en contact avec la surface extérieure de la bague extérieure 2 pour assurer la transmission d'efforts radiaux. La surface radiale 2c de la bague extérieure 2 est en contact avec un épaulement 21 du manchon 19 et la surface radiale 2a est en contact avec un circlips 30 en saillie radiale dans une rainure 31 du manchon 19. Le manchon 19 est de forme générale annulaire à section droite en L en demi coupe axiale, et comprend une partie axiale 32 et une bride radiale 33 pourvue de trous traversants 34 en vue d'une fixation par des vis sur un support non représenté.

La partie axiale 32 du manchon 19 est pourvue de deux découpes 35 en forme de fentes délimitées par deux plans parallèles, lesdits plans étant orthogonaux à une droite radiale. Chaque découpe 35 débouche de la partie axiale 32 sur une surface radiale d'extrémité 32a à l'opposé de la bride 33, tout en s'étendant axialement sensiblement jusqu'au niveau de la bride 33. Chaque découpe 35 présente une épaisseur relativement faible, par exemple quelques millimètres. Les découpes 35 sont parallèles et diamétralement opposées de façon symétrique par rapport à l'axe du roulement.

Dans chaque découpe 35, sont disposés un élément isolant 36 et une électrode 37 supportée par l'élément isolant 36 en contact avec l'un desdits plans parallèles. L'électrode 37 est séparée de l'autre desdits plans parallèles par un entrefer constitué par l'air ambiant. Le manchon 19 constitué d'un matériau électriquement conducteur, par exemple métallique ou synthétique, forme l'autre électrode d'un condensateur. En d'autres termes, le support du roulement est pourvu de deux condensateurs notés C1 et C2. Lors de la transmission d'un effort radial entre la bague intérieure 4 et le manchon 19, par l'intermédiaire des éléments roulants 6 et de la bague extérieure 2, la partie axiale 32 en contact avec la bague extérieure 2 est susceptible de se déformer. La portion 38 séparée de la partie axiale 32 par la découpe 35 est reliée à la bride 33 et n'est pas soumise audit effort. Les découpes 35 servent ainsi de moyen de découplage mécanique à la portion 38 du manchon 19, et de logement à l'électrode 37. Chaque entrefer entre les deux électrodes des condensateurs C1 et C2, c'est-à-dire entre chaque électrode 37 et la partie axiale 32, peut alors varier en sens opposé ce qui modifie la capacité de chaque condensateur dans un sens opposé. On peut alors, par la mesure des capacités C1 et C2, déduire la valeur des efforts radiaux appliqués au palier à roulement. Avantageusement, on peut effectuer une mesure différentielle des capacités entre C1 et C2. On peut ainsi s'affranchir des erreurs de mesures qui seraient provoquées par des variations d'entrefer entre les électrodes qui ne seraient pas dues à des variations de charge, comme dans le cas par exemple de dilatations ou contractions dues à des variations thermiques.

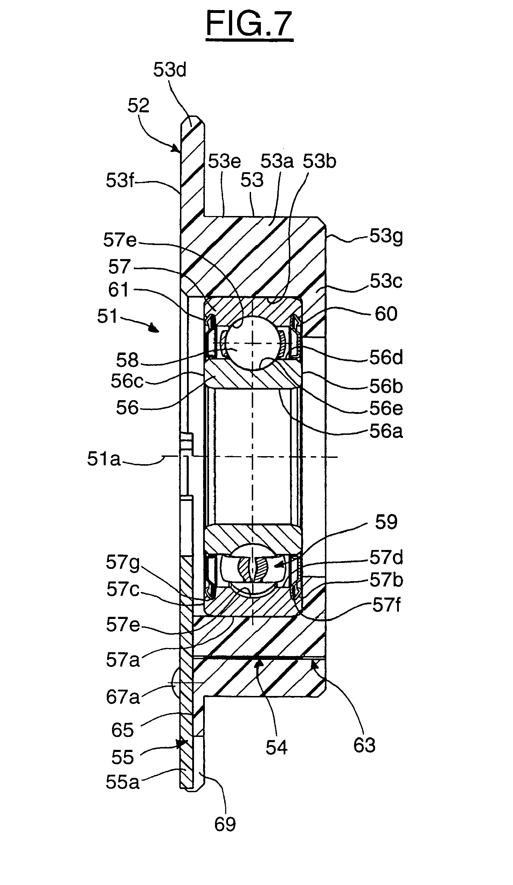

Comme illustré sur la figure 7, le palier à roulement, référencé 51 dans son ensemble, d'axe 51a, est monté à l'intérieur d'un manchon 52 intermédiaire comprenant un corps 53 à l'intérieur duquel est disposé un premier capteur 54 de charge connecté à une carte 55 apte à traiter des données transmises par ledit capteur 54.

Le palier à roulement 51 comprend une bague intérieure 56, une bague extérieure 57, entre lesquelles sont logés des éléments roulants, réalisés ici sous forme de billes 58, une cage 59 de maintien de l'espace circonférentiel des billes 58, et deux flasques d'étanchéité 60 et 61 métalliques formant des passages étroits.

La bague intérieure 56 est de type massive. On entend par bague de type massive une bague dont la forme est obtenue par usinage avec enlèvement de copeaux (tournage, rectification) à partir de tubes, de barres, d'ébauches forgées et/ou roulées. La bague intérieure 56 comprend un alésage 56a de forme cylindrique délimité par des surfaces latérales radiales 56b et 56c opposées, et une surface cylindrique extérieure 56d à partir de laquelle est formée une gorge circulaire 56e présentant en section droite un profil interne concave apte à former un chemin de roulement pour les billes 58, du côté intérieur orienté vers le haut.

La bague extérieure 57, également de type massive, comprend une surface cylindrique extérieure 57a délimité par des surfaces frontales radiales 57b et 57c opposées, et un alésage 57d de forme cylindrique à partir duquel est formé une gorge circulaire 57e présentant en section droite un profil interne concave apte à former un chemin de roulement pour les billes 58, du côté intérieur orienté vers le bas. La bague extérieure 57 comprend sur l'alésage 57d deux rainures annulaires 57f, 57g respectivement à proximité des surfaces radiales 57b et 57c. Les rainures 57f et 57g sont sensiblement symétriques entre elles par rapport à un plan passant par le centre des billes 58.

Les flasques d'étanchéité 60 et 61, aptes à empêcher l'intrusion d'éléments extérieurs indésirables, sont respectivement montés dans les rainures annulaires 57f et 57g et viennent à proximité de portions de la surface extérieure cylindrique 6d de la bague intérieure 56. En d'autres termes, les flasques d'étanchéité 60, 61 sont disposés radialement entre les bagues intérieure et extérieure 56, 57. Le flasque d'étanchéité 60 est monté axialement entre les billes 58 et les surfaces radiales 56b, 57b des bagues 56, 57. D'une manière analogue, le flasque d'étanchéité 61 est monté axialement entre les billes 58 et les surfaces radiales 56c, 57c desdites bagues 56, 57.

Le manchon 52, comprenant le corps 53 de forme générale annulaire, est réalisé ici en matière synthétique, par exemple en polyamide 6.6 chargé en fibres de verre. Bien entendu, il est également possible de prévoir le corps 53 dans un autre type de matériau par exemple dans un matériau métallique.

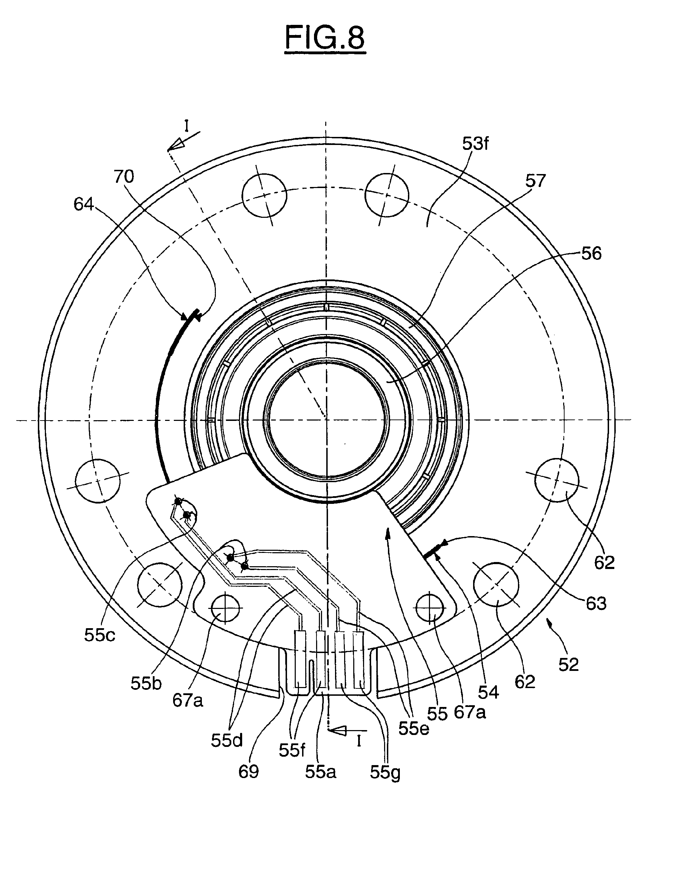

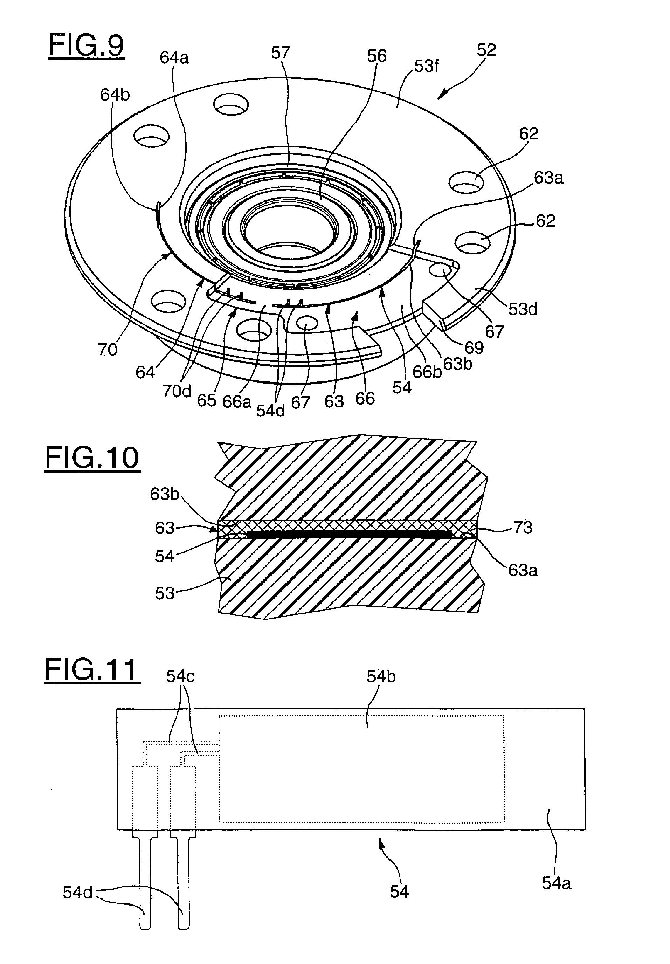

Le corps 53 comprend une portion axiale annulaire 53a comprenant un alésage 53b à l'intérieur duquel est emmanchée la bague extérieure 57 du roulement 51. En d'autres termes, le corps 53 supporte le roulement 51. Le corps 53 comprend, au niveau de l'alésage 53b, une nervure 53c dirigée radialement vers l'intérieur et offrant une surface d'appui à la surface radiale 57b de la bague extérieure 57. La nervure 53c est disposée à une extrémité axiale de l'alésage 53b et affleure la surface radiale 53g. La nervure 53c présente une dimension radiale sensiblement supérieure à celle de la surface radiale 57b de la bague extérieure 57. La portion axiale 53a se prolonge radialement vers l'extérieur, du côté opposé à la nervure 53c, par une collerette 53d radiale apte à servir de bride et sur laquelle sont formés une pluralité de trous de fixation 62 (figures 8 et 9) répartis circonférentiellement. Les trous de fixation 62 permettent d'assurer la fixation du roulement 51 par exemple au moyen de vis, dans un ensemble mécanique, tel qu'un châssis ou un bâti de machine à laver. La portion axiale 53a, la nervure 53c et la collerette 53d sont monobloc.

La portion axiale 53a comprend dans son épaisseur des logements, ici des fentes 63, 64 (figures 8 et 9) se présentant sous la forme de secteurs circulaires centrés sur l'axe de rotation du corps 53 du manchon 52, confondu avec l'axe de rotation la. Les fentes 63, 64 sont situées radialement entre l'alésage 53b et la surface extérieure 53e du corps 53, ici sensiblement à mi-distance desdites surfaces 53b, 53e. Les fentes 63, 64 sont respectivement délimitées radialement par deux portions cylindriques formant des parois 63a, 63b et 64a, 64b (figure 9), séparées dans le sens radial, c'est-à-dire dans le sens d'application des charges à mesurer, par une distance fixe. Lesdites parois peuvent être par exemple espacées initialement de 0,25 mm. Les fentes 63, 64 s'étendent sensiblement axialement le long du corps 53 du manchon 52 et débouchent au niveau de surfaces latérales radiales 53f et 53g opposées. La portion centrale de la fente 63 est décalée, dans le sens circonférentiel, sensiblement de 90° par rapport à la portion centrale de la fente 64, chaque fente 63, 64 s'étendant sensiblement sur un secteur circulaire, de l'ordre de 50 à 80°.

La surface latérale 53f du corps 53 comprend une empreinte creuse 65 (figure 9) comprenant une surface radiale 66 se présentant sous la forme de deux secteurs angulaires 66a et 66b, ladite surface radiale 16 s'étendant radialement vers l'extérieur à partir du bord intérieur du corps 53. Le premier secteur angulaire 66a, de l'ordre de 15° à 25°, comprend une dimension radiale réduite par rapport au second secteur angulaire 66b. Le second secteur angulaire 66b s'entend ici angulairement entre 40 et 55°. L'empreinte creuse 65 est agencée de manière à permettre un ajustement précis de la carte 55, par exemple une carte de circuit imprimé pouvant comprendre un circuit de pré traitement et de traitement d'un signal, ladite carte 55 recouvrant ici partiellement chacune des fentes 63, 64 et venant en saillie radiale vers l'intérieur par rapport au bord intérieur du corps 53. Des trous de fixation 67 (figure 9), ici au nombre de deux, sont formés dans l'empreinte creuse 65 pour permettre une fixation du support 51 sur le corps 53 du manchon 52, par exemple au moyen de vis 67a ou organes de fixation analogues (figures 7 et 8). La carte 55 comprend d'une manière analogue des trous de fixation (non représentés) permettant le passage desdites vis 67a. La carte 55 comprend, au niveau du second secteur angulaire 66b, une languette radiale de connexion 55a. La languette radiale 55a s'étend radialement le long d'un évidemment 69 prévu sur la collerette 53d du corps 53, le bord extérieur de la languette radiale 55a étant décalé vers l'intérieur par rapport à la périphérie de la collerette 53d. La carte 55 comprend des trous débouchants 55b, 55c, des éléments conducteurs 55d, 55e imprimés, à proximité desdits trous 55b, 55c, destinés respectivement à assurer une transmission d'information vers des têtes de connexion 55f, 55g intégrées à la carte 55 et montées radialement au niveau de la languette radiale 55a. Les têtes de connexion 55f, 55g permettent l'alimentation des capteurs et la transmission des signaux vers l'extérieur du roulement 51.

À l'intérieur de la fente 63 est disposé le premier capteur de charge 54, qui s'étend axialement le long de la fente 63. L'épaisseur de la fente 13 est prévue pour recevoir le capteur 54, présentant une épaisseur initiale de l'ordre de 0,2 mm, de façon à ce qu'il puisse venir se glisser sans effort avec un jeu radial faible entre les parois de la fente. Un second capteur de charge 70, identique au capteur 54, est monté à l'intérieur de la fente 64. Comme illustré plus visiblement sur la figure 11, le capteur de charge 54 se présente sous la forme d'une bande comportant un film 54a souple isolant dont l'épaisseur est adaptée pour permettre un montage aisé dudit capteur dans la fente 63. Le film 54a comprend une portion 54b sensible à la pression dans laquelle sont encapsulées des électrodes (non représentées), venant en appui sur une couche d'encre sensible à la pression représentée schématiquement en pointillé, dont la valeur de résistance est reliée linéairement avec la pression exercée sur ladite encre. La relation est donnée par la formule suivante:
R=K/F, dans laquelle R représente la résistance électrique, K une constante prédéterminée, F étant l'effort appliqué perpendiculairement à la surface de la portion 54b du film 54a.

Des éléments conducteurs, tels que des fils 54c reliés à la portion sensible 54b, permettent par circulation de courant électrique de transmettre les données représentatives de l'état de charge du roulement 51 émises par le capteur 54, lesdits fils 54c comprenant des extrémités de connexion 54d, telles que des fiches, en saillie par rapport à la surface latérale du film 54a. Les extrémités de connexion 54d, ici au nombre de deux, sont ici en saillie axiale par rapport à la surface radiale 66 de l'empreinte creuse 65 pour pénétrer à l'intérieur des trous 55b (figure 8) de la carte 55 lors du montage de ladite carte 55 sur le manchon 52, lesdites extrémités de connexion étant ensuite reliées aux éléments conducteurs 55b classiquement par un point de soudure. D'une manière analogue, le second capteur 70 comprend un film équipé d'une portion sensible à l'intérieur de laquelle sont encapsulées des électrodes venant en appui sur un couche d'encre sensible à la pression, et des fils comprenant des extrémités de connexion 70d (figure 8) coopérant avec des alvéoles 55c du support 55. Ce type de capteur à base d'encre colloïdale sensible à la pression est connu par le document EP-B-0 871 681. Ce type d'encre comprend, par exemple, un liant polymère élastique et une charge pour ledit polymère de nanoparticules semi-conductrices, pouvant être en carbone, disposées dans le liant. L'encre solidifiée peut présenter une résistivité d'environ 10² à 10⁷ ohms-centimètres, et une sensibilité dans la gamme de 0,44 à 132000 microSiemens/kg, les particules représentant environ 1% à environ 7% du poids de l'encre.

Le premier capteur 54 peut avantageusement être utilisé en tant que capteur dit de mesure, et monté de façon que la charge radiale statique supportée par le roulement 51 s'exerce sur la portion 54b du capteur de façon sensiblement perpendiculaire, une variation de charge se traduisant par une variation de compression de ladite zone 54b permettant ainsi une mesure de la charge radiale sur le roulement 51 par le biais de la variation de la résistance électrique. Le second capteur 70 peut avantageusement être utilisé en tant que capteur de référence disposé de façon que la charge radiale statique supportée par le roulement 51 ne s'applique pas sur la portion sensible du capteur 70.

Par exemple, si l'on souhaite connaître, par le biais d'un tel roulement, la charge statique de linge dans un tambour d'une machine à laver le linge, on dispose le premier capteur 70 dans la partie basse du roulement. La détermination de la charge du tambour se fera par mesure de la variation de la résistance du capteur 54 entre l'état vide et l'état chargé du tambour. La disposition avec deux capteurs 54, 70 reliés électriquement entre eux, permet de procéder à une mesure différentielle en pont sur les capteurs 54, 70. En mesurant les différences de résistance du capteur 54 par rapport au capteur 70 de référence, on peut ainsi éliminer des anomalies de mesure qui pourraient résulter de variations dimensionnelles, dues par exemple à des variations de température, engendrant une variation de la pression au niveau des capteurs 54, 70.

Outre le fait d'obtenir des mesures de charges statiques plus fiables, une disposition avec deux capteurs 54, 70 permet également d'obtenir des informations sur les charges dynamiques en rotation dues par exemple au balourd du tambour.

Pour monter le dispositif, on monte les capteurs 54, 70 souples et la carte 55 à l'intérieur du corps 53 du manchon 52 avant l'emmanchement du roulement 51 afin que le serrage de la bague extérieure 57 au niveau de l'alésage du corps 53 provoque en resserrement des fentes 63, 64 de manière à immobiliser les capteurs 54, 70 et à les précontraindre radialement afin de s'affranchir d'éventuels problèmes d'hystérésis qui pourraient nuire à la fiabilité de la mesure de charge. Avec un tel roulement, il n'est pas nécessaire de prévoir un élément supplémentaire augmentant le coût du roulement permettant de contraindre le corps 53 du manchon 52.

Le mode de réalisation illustré sur la figure 10 diffère du précédent en ce que la fente 63 présente une épaisseur agrandie. En d'autres termes, la distance radiale entre les parois 63a et 63b est sensiblement supérieure à l'épaisseur du capteur facilitant ainsi le montage dudit capteur 54 à l'intérieur du corps 53, par exemple en caoutchouc. Le capteur 54 est monté en contact radial avec une des parois de la fente 63, ici la paroi 63a. La fente 63 est ensuite remplie avec une matière synthétique, par exemple une résine 73 qui durcit en polymérisant. Le corps 53 comprend ainsi, après le remplissage de la fente 63, une couche de résine 73 venant en contact radial avec une des faces du capteur 54 et les parois 63a, 63b de la fente 63. En d'autres termes, les efforts de compression sont alors transmis entre la paroi 63b de la fente 63 et une face sensible du capteur 54 par l'intermédiaire de la couche de résine 73. Dans ce mode de réalisation, le corps 53 est réalisé en deux matériaux différents, le polyamide pour la structure de base résistante du corps 53 et une résine polymérisable pour le remplissage des fentes 63, 64. Bien entendu, il est envisageable de monter le capteur 54 de manière qu'il soit sur deux faces opposées en contact radial avec la couche de résine. En d'autres termes, le capteur 54 peut être noyé à l'intérieur de ladite couche. Il est également envisageable de prévoir des couches de résine de nature différente à l'intérieur de la fente 63.

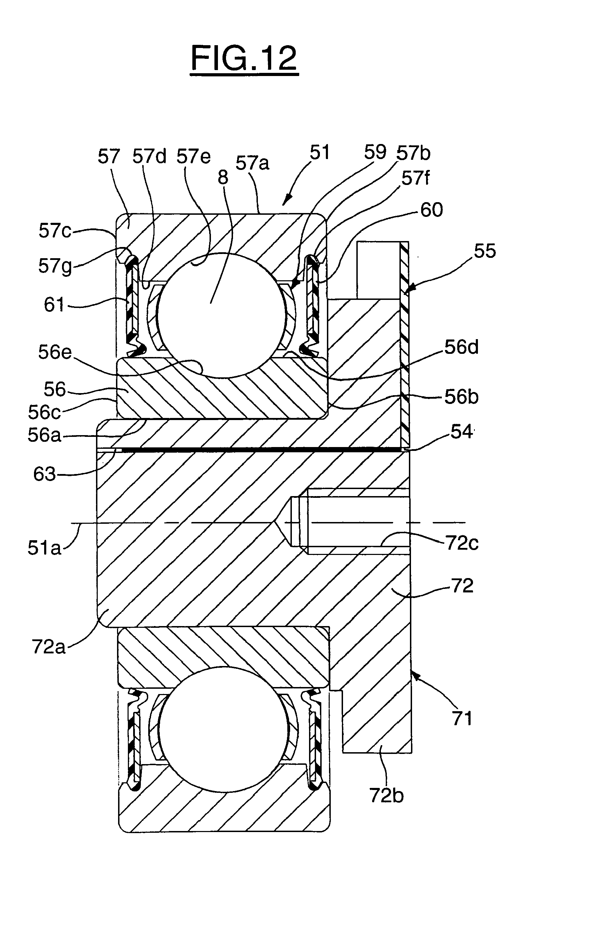

Le mode de réalisation illustré sur la figure 12 diffère du précédent, en ce que le manchon 71 équipé d'un corps annulaire 72, réalisé ici en matière synthétique, comprend une portion axiale 72a sur laquelle est emmanchée la bague intérieure 56 du roulement 51 qui est fixe ici. La portion axiale 72a est prolongée à une extrémité par une collerette radiale 72b offrant une surface d'appui à la surface radiale de la bague intérieure 56. En d'autres termes, la collerette 72b présente une dimension radiale supérieure à celle de la bague intérieure 56. D'une manière analogue au mode de réalisation précédent, le corps 73 comprend des fentes 63 à l'intérieur desquelles sont montés des capteurs 54 de type résistif, et une carte 55 apte à traiter des données transmises par lesdits capteurs 54. Le corps 53 comprend, en outre, un trou fileté 72, coaxial avec l'axe 51a du roulement 51, de façon à permettre par exemple la fixation du manchon sur un arbre fixe (non représenté).

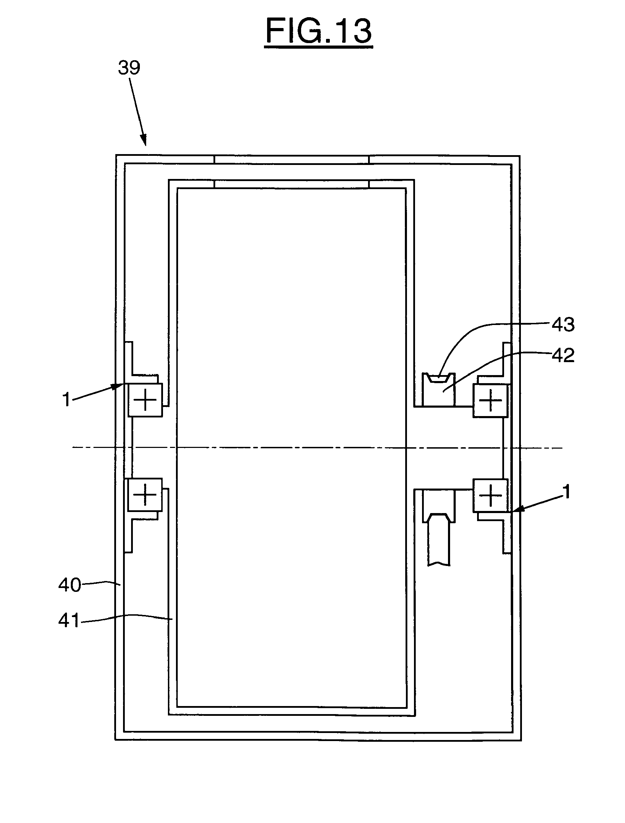

La figure 13 représente de façon schématique une machine à laver 39 qui comprend un châssis 40, un tambour 41, deux paliers à roulement 1, et une poulie 42 d'entraînement par courroie 43. Les paliers à roulement 1 sont disposés d'un côté et de l'autre du tambour 41 et supportés par le châssis 40. Les paliers à roulement 1 voient la masse supportée, donc la charge du tambour 41 seule susceptible de varier significativement.

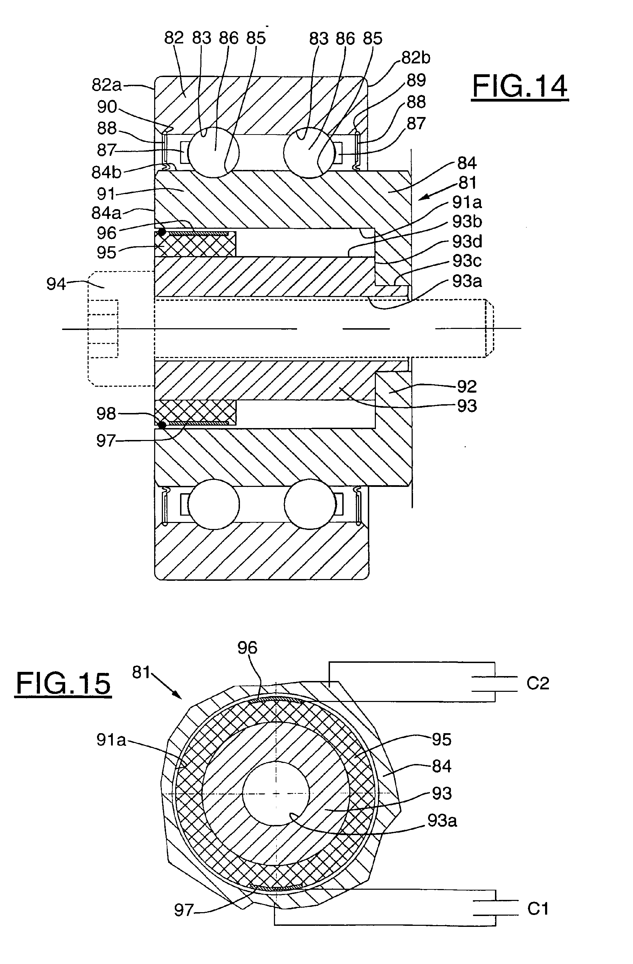

Comme on peut le voir sur la figure 14, un dispositif 81 comprend une bague extérieure 82 pourvue de deux chemins de roulement 83, une bague intérieure 84 pourvue de deux chemins de roulement 85, deux rangées d'éléments roulants 86, ici des billes, disposés entre les chemins de roulement 83 et 85, deux cages 87 de maintien de l'espace circonférentiel des éléments roulants 86, et deux joints d'étanchéité 88 montés sur la bague extérieure 82 et venant frotter sur une portée cylindrique 84b de la bague intérieure 84, tout en étant disposés radialement entre les deux bagues 82 et 84 et axialement entre les éléments roulants 86 et l'une des surfaces latérales 82a, 84a, 82b, 84b des bagues 82, 84. Les joints d'étanchéité 88 sont montés dans des rainures annulaires 89, 90 formées dans la bague extérieure 82, à proximité de sa surface latérale radiale 82a, 82b.

La bague intérieure 84 de forme annulaire à section droite en demi coupe axiale en L comprend une partie allongée axialement 91 sur la surface extérieure de laquelle sont formés les chemins de roulement 85 et une partie radiale 92 dirigée vers l'intérieur à partir d'une extrémité de la partie axiale 91. Le dispositif de mesure de charge 31 comprend, en outre, une entretoise 93 allongée axialement pourvue d'un alésage 93a prévu pour recevoir une vis 94 de fixation représentée en traits pointillés, une surface extérieure cylindrique 93b de grand diamètre s'étendant sur la majeure partie de la longueur de l'entretoise 93 et une surface extérieure cylindrique 93c de petit diamètre emmanchée dans l'extrémité libre de la partie radiale 92 de la bague intérieure 84 qui présente un court alésage axial. Entre les surfaces axiales 93b et 93c, est formée une surface radiale 93d en contact avec une surface radiale correspondante de ladite partie radiale 92 de la bague intérieure 84. Un espace radial subsiste entre la surface extérieure 93b et l'alésage de la partie axiale 91 de la bague intérieure 84.

Dans ledit espace, sont disposés un support 95 en matériau isolant électriquement, par exemple un matériau synthétique, de forme générale annulaire, et deux éléments électriquement conducteurs 96 et 97 sensiblement diamétralement opposés, affleurant la surface extérieure axiale du support 95 et séparés de l'alésage 91a de la partie axiale 91 de la bague intérieure 84 par un faible entrefer radial. Un joint d'étanchéité 98 se présentant sous la forme d'un tore en matériau élastique, par exemple en élastomère est disposé dans une rainure formée sur la surface extérieure du support 95 du côté opposé à la partie radiale 92 de la bague intérieure 84 et est en contact avec l'alésage 91a, empêchant ainsi l'intrusion de corps ou de liquides étrangers dans l'espace entre la bague intérieure 84 et l'entretoise 93.

Par ailleurs, le sous-ensemble formé par la bague intérieure 84 et l'entretoise 93 présente en demi coupe axiale une forme générale de U avec des branches axiales et un fond radial, le sous-ensemble étant susceptible de se déformer légèrement lorsque des charges radiales sont appliquées sur la bague intérieure 84 par l'intermédiaire de la bague extérieure 82 des éléments roulants 86. La déformation se traduit par exemple par un rapprochement de l'élément conducteur 96 et de la partie axiale 91 de la bague intérieure 84 et par l'éloignement correspondant de l'élément conducteur 97 et de la partie axiale 91 de la bague intérieure 84, vice-versa.

L'élément conducteur 96 et la partie axiale 91 forment un condensateur dont le diélectrique est formé par l'air qui se trouve dans l'entrefer entre ces deux pièces. De même, l'élément conducteur 97 et la partie axiale 91 forment les deux électrodes d'un condensateur dont le diélectrique est formé par l'air se trouvant dans l'entrefer qui les sépare. On dispose ainsi d'un dispositif de mesure de charge radiale comprenant deux condensateurs notés C1 et C2 sur la figure 15, intégrés au palier à roulement en ce sens que l'une des bagues du palier remplit à la fois la fonction de bague de palier à roulement et la fonction d'électrode de condensateur. La présence de deux condensateurs permet de réaliser une mesure différentielle des capacités s'affranchissant ainsi de l'influence de phénomènes susceptibles d'affecter la fiabilité des résultats de mesure tels que la dilatation thermique.

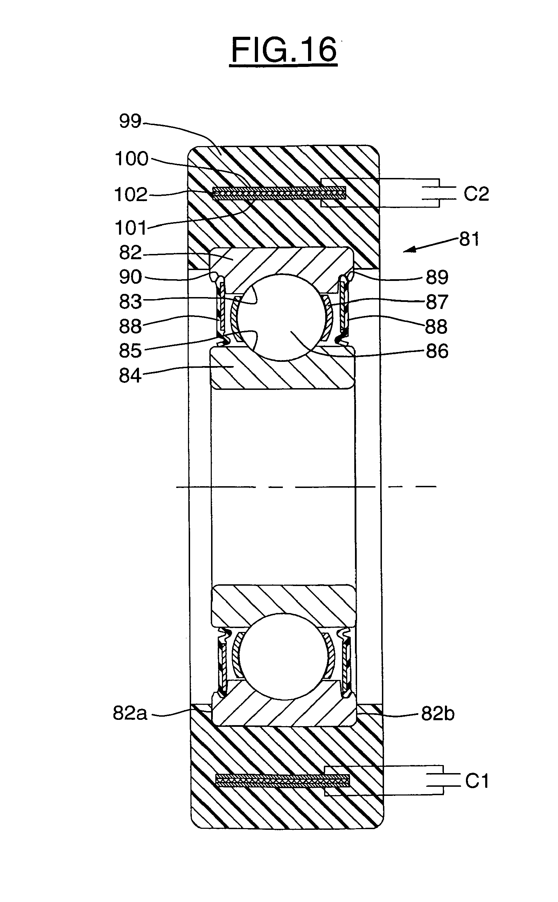

Dans le mode de réalisation illustré sur la figure 16, le palier à roulement comporte une seule rangée d'éléments roulants 86 disposés entre les bagues intérieure 82 et extérieure 84, la bague extérieure 82 étant pourvue d'une surface extérieure cylindrique délimitée par deux surfaces frontales radiales et la bague intérieure 84 étant pourvue d'un alésage délimité par deux surfaces frontales radiales dirigées vers l'extérieur. Le dispositif 81 se complète par un manchon 99 réalisé en matériau synthétique, de forme annulaire, entourant la bague extérieure 82, en contact direct avec la surface extérieure cylindrique et une partie des surfaces frontales radiales 82a, 82b de ladite bague extérieure 82. Le manchon 99 présente une certaine épaisseur dans le sens radial et comporte, noyés dans le matériau synthétique, une pluralité de condensateurs, notés C1 et C2, chaque condensateur étant pourvu d'une électrode extérieure 100, d'une électrode intérieure 101 et d'un diélectrique souple 102. Les électrodes 100 et 101 occupent un secteur angulaire limité, par exemple de l'ordre de 5 à 20° et sont disposées de façon régulièrement répartie circonférentiellement. Les électrodes 100 et 101 qui sont de faible épaisseur et déformables, peuvent être constituées par une portion de tôle métallique conductrice, par exemple un clinquant.

Le diélectrique 102 est constitué d'un matériau synthétique présentant à la fois des propriétés d'isolation électrique et de souplesse mécanique, en particulier en compression. Le diélectrique 102 peut être formé d'un matériau synthétique alvéolaire. Lorsqu'une charge radiale est appliquée sur la surface extérieure du manchon 99, et est transmise à la bague intérieure 84 par l'intermédiaire de la bague extérieure 82 et des éléments roulants 86, le condensateur C1, C2 qui occupe la majeure partie de la longueur axiale du manchon 99, par exemple une longueur axiale sensiblement égale à celle de la bague extérieure 82, se déforme radialement par écrasement du diélectrique 102, ce qui produit, par exemple une diminution de l'entrefer radial des électrodes du condensateur C2 et une augmentation de l'entrefer radial des électrodes du condensateur C1 vice-versa, d'où une modification de la capacité des condensateurs C1 et C2 qui peut être détectée et exploitée par des moyens électroniques non représentés qui peuvent être disposés dans le manchon pour en déduire la valeur des charges appliquées. Le mode de réalisation illustré sur la figure 16 offre une excellente protection des condensateurs tout en utilisant un palier à roulement de type conventionnel fabriqué en grande série à des coûts raisonnables.

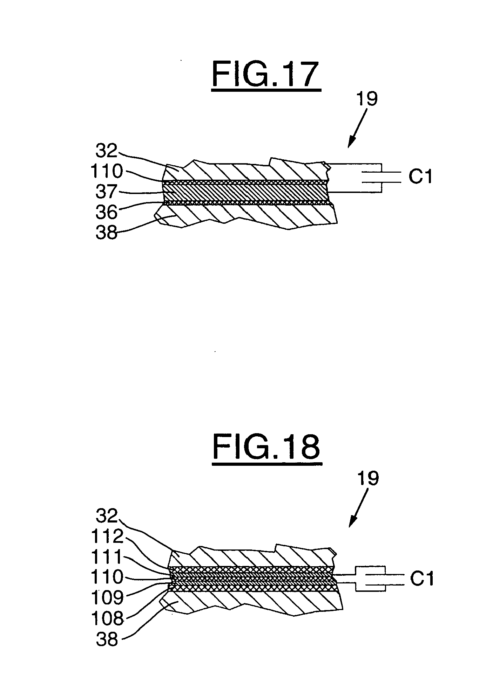

Dans le mode de réalisation illustré sur la figure 17, l'entrefer entre l'électrode 37 et la partie axiale 32 est occupé, non plus par l'air ambiant, mais par un matériau diélectrique 110 mince présentant la souplesse mécanique suffisante pour voir son épaisseur varier lors de l'application d'une charge radiale. L'élément diélectrique 36 est également mince et légèrement déformable sous charge radiale. Une électrode est formée par le support 19 dans son ensemble pourvu de la partie axiale 32 et de la protubérance 38 équipotentielles. Le support 19 est séparé de l'électrode 37 par les deux diélectriques. Dans ce mode de réalisation, les surfaces en regard sont doublées d'où un doublement de la capacité du condensateur. Ce mode de réalisation permet en outre une insertion aisée de l'électrode 37 munie sur chacune de ses faces d'un matériau diélectrique déformable. Un ajustement avec une légère précontrainte dans la fente permet le maintien relatif des pièces.

Dans le mode de réalisation illustré sur la figure 18, le condensateur C1 comprend deux électrodes 109 et 111 distinctes des parties axiales 32 et 38, mutuellement séparées par un diélectrique 110. L'électrode 109 est supportée par un élément diélectrique 108 et un élément diélectrique 112 est également prévu entre la partie axiale 32 et l'électrode 111. On forme ainsi un condensateur indépendant du support 19. Le support 19 peut être le cas échéant, réalisé en un matériau isolant électrique.

Bien entendu, on pourrait prévoir, à titre de variante, un palier à roulement à bague extérieure tournante et à bague intérieure fixe. On peut également concevoir de réaliser l'isolant par une simple couche d'air. Il n'est plus alors nécessaire de prévoir une couche de matériau synthétique pour séparer la bague extérieure du roulement et l'électrode 22.

Dans un mode de réalisation, le dispositif comprend un ou plusieurs condensateurs de mesure de charges mécaniques axiales. Chaque condensateur est disposé entre des surfaces radiales. Une mesure différentielle peut être effectuée en disposant un condensateur de chaque côté du roulement.

On pourrait, sans sortir de l'invention, prévoir un dispositif comportant plus de deux capteurs afin de pouvoir détecter des charges multidirectionnelles.

Quelque que soit le mode de réalisation de l'invention, le dispositif de mesure de charge offre de nombreux avantages. L'utilisation partielle ou totale du support de roulement pour effectuer la mesure de la charge permet une utilisation de roulement standard fabriqué en très grande série ne nécessitant pas la fabrication d'une bague munie d'une encoche usinée génératrice de déchets, et de coûts supplémentaires. D'autre part, le support de roulement permet un montage particulièrement aisé du palier instrumenté dans un ensemble mécanique.

## Revendications

1. Palier à roulement comprenant un support et un roulement disposé dans le support, le roulement comprenant deux bagues dont l'une peut tourner par rapport à l'autre, au moins une rangée d'éléments roulants, le support comprenant un dispositif de mesure de la charge appliquée sur ledit palier, le dispositif de mesure comprenant au moins un condensateur pourvu d'électrodes et d'un isolant entre les électrodes, **caractérisé par le fait que** qu'il comprend en outre un manchon dans lequel est logée la bague non tournante du roulement, ledit manchon comportant un corps dans l'épaisseur duquel est ménagée au moins une fente destinée à recevoir un condensateur, ladite fente débouchant au niveau d'une surface latérale du corps du manchon et ladite fente étant délimitée dans le sens d'application de la charge, par deux parois espacées d'une distance sensiblement constante.

2. Palier selon la revendication 1, dans lequel ledit manchon comporte deux fentes chacune recevant un condensateur (C1, C2).

3. Palier selon la revendication 2, dans lequel les entrefers entre les électrodes des deux condensateurs peuvent varier en sens opposé en fonction de la charge appliquée sur le palier.

4. Palier selon l'une des revendications précédentes, dans lequel le capteur de charge vient en contact avec au moins une des parois délimitant la fente dans le sens d'application des charges.

5. Palier selon l'une des revendications précédentes, dans lequel la fente se présente sous la forme d'un secteur circulaire centré sur l'axe de rotation du corps du manchon et s'étendant axialement sensiblement sur toute la longueur dudit corps.

6. Palier selon l'une des revendications 1 à 4, dans lequel la fente est délimitée par deux surfaces planes parallèles.
